# EUROPEAN PATENT SPECIFICATION

(11) **EP 1 788 044 B1**
(45) Date of publication and mention of the grant of the patent: **23.12.2009**
(21) Application number: 06123794.7
(22) Date of filing: 10.11.2006
(51) Int. Cl.: C09D 11/00, C08F 299/00, C08F 16/08

(54) **Ink-jet ink, ink-jet ink set, and ink-jet recording method**
Tinte, Tintensatz und Aufnahmemethode für den Tintenstrahldruck
Encre, ensemble d'encres et procéde d'enregistrement pour jet d'encre

(30) Priority: 16.11.2005 JP 2005331292
(43) Date of publication of application: 23.05.2007
(73) Proprietor: KONICA MINOLTA HOLDINGS, INC., Tokyo 100-0005 (JP)
(72) Inventor: Yamauchi, Masayoshi, 1 Sakura-machi, Hino-shi Tokyo 191-8511 (JP); Nakamura, Masaki, 1 Sakura-machi, Hino-shi Tokyo 191-8511 (JP); Tsubaki, Yoshinori, 1 Sakura-machi, Hino-shi Tokyo 191-8511 (JP); Ohkubo, Kenichi, 1 Sakura-machi, Hino-shi Tokyo 191-8511 (JP); Furuno, Kumiko, 1 Sakura-machi, Hino-shi Tokyo 191-8511 (JP)
(74) Representative: Henkel, Feiler & Hänzel

(56) References cited:
- EP-A- 1 564 232
- EP-A- 1 574 528
- EP-A- 1 616 899
- EP-A- 1 702 961
- WO-A2-2005/012448
- US-A- 5 994 033

## Description

### TECHNICAL FIELD

The present invention relates to an ink-jet ink which generates neither beading nor color bleeding on minimal or non-ink absorptive recording media, and is capable of forming images exhibiting improved water-fastness and fixability on recording media, an ink set, and an ink-jet recording method.

### BACKGROUND

Ink-jet recording methods are capable of recording highly detailed images, employing a relatively simple apparatus and have resulted in rapid development in various fields. Further, their applied uses have been diversified and recording media and inks to meet each purpose have been employed.

Specifically, in recent years, the recording rate has been markedly increased and printers which are well suited for shortrun printing have been developed. However, in order to make best use of their capability, required is exclusive ink-jet paper, exhibiting ink absorbability.

When recording is carried out onto minimal ink absorptive coated paper and art paper, or completely non-ink absorptive plastic film, so-called bleeding problems occur in which inks which differ in color blend with each other on recording media. When recording media are intended to be diversified for ink-jet recording, the above problems have been a major concern.

In order to overcome the above concerns, a hot-melt type ink-jet recording method is proposed in which a hot-melt type ink composition composed of components, such as solid wax which is solid at room temperature, is employed. This wax is liquidized via heating, ejected via application of any appropriate form of energy, and cool-solidified upon deposition on recording media to form recording dots (refer to Patent Documents 1 and 2). Since the above hot-melt type ink is solid at room temperature, no staining occurs during handling. Further, since the ink barely evaporates during melting, no nozzle clogging results. Further, since it is solidified immediately after deposition, color bleeding is minimized. As a result, the above ink composition has been regarded as one which exhibits excellent printing quality irrespective of paper quality. However, images recorded employing the above method have resulted in problems in which since ink dots are in a soft wax state, image quality is degraded due to raised dots and abrasion resistance has been insufficient.

On the other hand, another ink-jet recording ink is disclosed which is cured via exposure to actinic radiation (or actinic ray) (refer to Patent Document 3). Further, so-called non-aqueous ink is proposed, which incorporates pigments as a colorant, and at least triple-function polyacrylate as a polymerizable material, employing alcohol as a main solvent (refer to Patent Document 4). Further proposed is an ink employing water based ultraviolet radiation polymerizable monomers (refer to Patent Document 5).

In these methods, since the ink itself is cured employing curing components, it becomes possible to record onto non-absorptive recording media. However, since a large amount of curing components, other than colorants, are incorporated and such components do not volatize, problems have occurred in which the recording image surface is raised due to ink dots, whereby image quality, especially glossiness, does not appear natural.

Further, conventional prior art curing components are concerned with operator safety, and even though safety is assured, the selection range of appropriate compounds is limited, whereby problems have occurred in which it is not possible to freely design those in both aspects of compounds and physical properties.

On the other hand, Patent Document 6 discloses an ink-jet ink incorporating polyvinyl alcohol having a photo cross-linkable suspension group. By employing the above ink, it is possible to overcome the foregoing problems. However, it has been found that some of the formed images exhibit insufficient water-fastness as well as insufficient fixability with employed recording media.
(Patent Document 1) U.S. Patent No. 4,391,369
(Patent Document 2) U.S. Patent No. 4,484,948
(Patent Document 3) U.S. Patent No. 4,228,438
(Patent Document 4) Japanese Patent Publication No. 5-64667
(Patent Document 5) Japanese Patent Publication Open to Public Inspection (hereinafter referred to as JP-A) No. 7-224241
(Patent Document 6) W02005/012448

### SUMMARY

In view of the foregoing, the present invention was accomplished. An object of the present invention is to provide an ink-jet ink, which generates neither beading nor color bleeding on minimal or non-ink absorptive recording media, and is capable of forming images exhibiting improved water-fastness and fixability on recording media, an ink set, and an ink-jet recording method.

The above object of the present invention can be achieved via the following embodiments.

(1) One of the embodiments of the present invention is an ink-jet ink comprising:
(a) a colorant;
(b) water; and
(c) a polymer produced by saponification of a polyvinyl acetate,
wherein the polymer comprises a backbone and a group of first side chains and a group of second side chains, provided that the first chains are capable of cross-linking (cross-linkable) between the first chains by irradiation with actinic rays, and the second chains are capable of thermally reacting with a cross-linking agent.

(2) Another embodiment of the present invention is an ink-jet ink,
wherein the second side chain comprises an acetoacetyl group or a carboxyl group.

(3) Another embodiment of the present invention is an ink-jet ink, further comprises a cross-linking agent.

(4) Another embodiment of the present invention is an ink-jet ink, further comprises a cross-linking agent capable of reacting with an acetoacetyl group or a carboxyl group.

(5) Another embodiment of the present invention is an ink-jet ink, wherein the cross-linking agent is selected from the group consisting of hydrazine compounds, amine compounds, an epoxy compounds, aziridine compounds, oxazoline compounds and metal salts having a metal of two valences or more.

(6) Another embodiment of the present invention is an ink-jet ink, wherein a content of the polymer is 0.8 to 5.0 weight% based on the total weight of the ink-jet ink.

(7) Another embodiment of the present invention is an ink-jet ink, wherein a polymerization degree of the polymer is 200 to 4,000 and a saponification ratio of the polymer is 77 to 99%.

(8) Another embodiment of the present invention is an ink-jet ink, wherein a modification ratio of the first side chains to the backbone of the polymer is 0.8 to 4 mol%.

(9) Another embodiment of the present invention is an ink-jet ink, further comprises a water-soluble photopolymerization initiator.

(10) Another embodiment of the present invention is an ink set comprising at least two kinds of ink-jet inks, wherein at least one of the ink-jet ink in the ink-jet ink of the above-described Item (1).
(11) Another embodiment of the present invention is a method of forming an image comprising the steps of:
(a) ejecting droplets of the ink-jet ink of the above-described Item (1) on a recording medium;
(b) irradiating the droplets of the ink-jet ink on the recording medium with actinic rays; and
(c) drying the irradiated droplets of the ink-jet ink. (12) A method of forming an image comprising the steps of:
   (a) ejecting droplets of the ink-jet ink of the above-described Item (10) on a recording medium;
   (b) irradiating the droplets of the ink-jet ink on the recording medium with actinic rays; and
   (c) drying the irradiated droplets of the ink-jet ink.

Based on the present invention, it is possible to provide an ink-jet ink which generates neither beading nor color bleeding on minimal or non-ink absorptive recording media, and is capable of forming images exhibiting improved water-fastness and fixability on recording media, an ink set, and an ink-jet recording method.

### DESCRIPTION OF THE PREFERRED EMBODIMENTS

Preferred embodiments to practice the present invention will now be detailed.

In view of the foregoing problems, the inventors of the present invention conducted diligent investigations. As a result, the following was discovered and the present invention was achieved. An ink-jet ink was prepared which was characterized in incorporating at least (a) a colorant, (b) water, and (c) a polymer which has, on the main chain (or called as "a backbone") of a polyvinyl acetate-saponified product, photo cross-linkable side chains (the first side chains) capable of undergoing cross-linking among the side chains via exposure to actinic radiation and thermally reactive side chains (the second side chains) capable of reacting with cross-linking agents. The resulting ink-jet ink resulted in neither generation of beading nor color bleeding on minimal or non-ink absorptive recording media, and was capable of forming images exhibiting improved water-fastness and fixability for recording media.

Namely, the ink-jet ink (hereinafter also simply referred to as the ink) of the present invention incorporates a polymer (hereinafter also referred to as a cross-linkable polymer) which has, on the main chain (or the backbone) of a saponified-polyvinyl acetate product, photo cross-linkable side chains capable of undergoing cross-linking upon exposure to actinic radiation and thermally reactive side chains capable of reacting with cross-linking agents. When actinic radiation is exposed onto images printed on recording media employing the ink-jet ink of the present invention, photo cross-linkable side chains of the cross-linkable polymer undergo crosslink with each other to increase the viscosity of the printed ink, whereby it is possible to minimize generation of color mixing (color bleeding) among dots, incorporating different colorants, which are deposited at adjacent positions, and results in non-uniformity (beading) due to overflow of the ink. Consequently, it has become possible to carry out printing onto non-ink absorptive recording media.

Heretofore, image forming techniques have been known which employ such inks incorporating components which are cured upon exposure to actinic radiation. However, monomers have been employed as a curing component to result in poor energy efficiency, whereby in order to carry out printing onto non-absorptive media without any modification, it has been necessary to add those in a large amount to the ink. Due to that, image portions are raised, making it impossible to form images resulting in the feel of high smoothness. In the present invention, it is not necessary to incorporate curing components in a large amount and it is possible to decrease the total solid amount in the ink to about 10%, whereby it is possible to significantly decrease the height of raised images after vaporizable components are vaporized. Consequently, it is possible to prepare high quality printed images of high smoothness without any modification.

Furthermore, a cross-linkable polymer incorporated in the ink of the present invention incorporates thermally reactive side chains capable of reacting with cross-linking agents. By adding to the ink, cross-linking agents which react with thermally reactive side chains or mixing the ink of the present invention with cross-linking agents on a recording medium, the thermally reactive side chains of the cross-linkable polymer react with the cross-linking agents via heat formed during exposure to actinic radiation, or heat during the drying process, whereby cross-linking points are formed. It is assumed that after the above cross-linking reaction upon exposure to actinic radiation, the cross-linking reaction of thermally reactive side chains results at a slight delay, whereby the structure of the cross-linkable polymer is firmly fixed, resulting in excellent image waterfastness and substrate fixability.
A cross-linkable polymer incorporated in the ink of the present invention incorporates photo cross-linkable side chains and thermally reactive side chains in one molecule. As noted above, since it is possible to form a strong cross-linking structure via a dual stage cross-linking reaction, it is possible to prepare ink resulting in superior image durability, compared to ink incorporating both a polymer having photo cross-linkable side chains, and a polymer having thermally reactive side chains.

The present invention will now be detailed.

### <Cross-linkable Polymers>

The polymers according to the present invention, which have, on the backbone (or called as the main chain) of a polyvinyl acetate-saponified product, photo cross-linkable side chains capable of cross-linking among the side chains upon exposure to actinic radiation and thermally reactive side chains capable of reacting with cross-linking agents, are prepared by introducing, into the polyvinyl acetate-saponified products or derivatives thereof, photo cross-linkable side chains composed of modifying groups of types such as a photo-dimerization type, a photodecomposition type, a photopolymerization type, a photo-modification type, or a photo-depolymerization and thermally reactive side chains capable of reacting with cross-linking agents. In view of photographic speed and characteristics of formed images, preferred as the modifying group of the photo cross-linkable side chains are photopolymerization type modifying groups.

The degree of polymerization of the main chain is preferably 200 - 4,000, but is more preferably 200 - 2,000 in view of ease of handling. The modification ratio of the side chains with respect to the main chain (the backbone) is preferably 0.3 - 4 mol%, but is more preferably 0.8 - 4 mol% in view of reactivity. When it is at least 0.3 mol%, the cross-linkable polymer exhibits sufficient cross-linking capability, resulting in a larger trend of the effects of the present invention, while when it is at most 4 mol%, images are formed at an appropriate cross-linking density, resulting in formation of images with minimal brittleness.

Preferred as the photo-dimerization type modifying groups are those into which a diazo group, a cinnamoyl group, a stilbazonium group, or a stilquinolium group is introduced. Such modifying groups are described in JP-A No. 60-129742.

In above JP-A No. 60-129742, described are the compounds represented by following Formula (1) in which a cationic modifying group, being a stilbazonium group, is introduced into a polyvinyl alcohol structure.

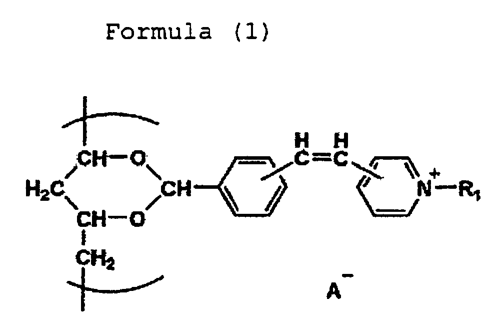

wherein R₁ represents an alkyl group having 1 - 4 carbon atoms and A⁻ represents a counter anion.

JP-A No. 56-67309 describes, in a polyvinyl alcohol structure, compounds having the side chains in a 2-azido-5-nitrophenolcarbonyloxyalcohol structure, represented by following Formula (2), or the side chains in a 4-azido-3-nitrophenylcarbonyloxyethylene structure, represented by following Formula (3).

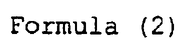

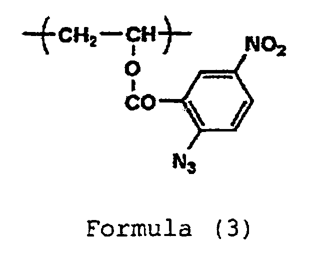

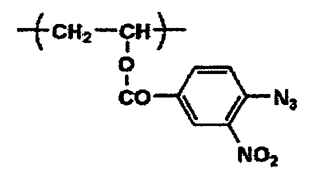

Further, the modifying groups represented by following Formula (4) are also preferably employed.

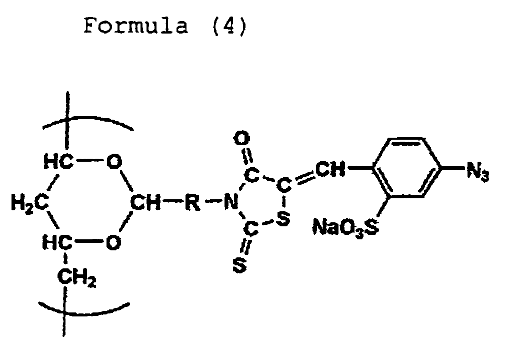

wherein R represents an alkylene group or an aromatic ring, which is preferably a benzene ring.

In view of reactivity, preferred as photopolymerization type modifying agents are those represented by following Formula (5), described, for example, in, by JP-A Nos. 2000-181062 and 2004-189841.

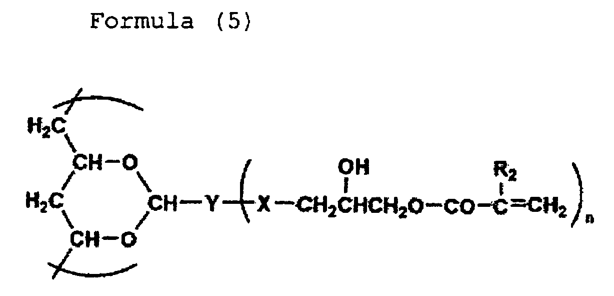

wherein R₂ represents a methyl group or a hydrogen atom, n represents 1 or 2, X represents -(CH₂)ₘ-COO- or -O-, Y represents a aromatic ring or a single bond, and m represents an integer from 0 to 6.

Further, it is also preferable that side chains are introduced employing the compounds represented by following Formula (6) which are of the photopolymerization type, described in JP-A No. 2004-161942.

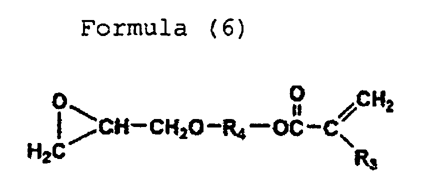

wherein R₃ represents a methyl group or a hydrogen atom, and R₄ represents a linear or branched alkylene group having 2 - 10 carbon atoms.
In the cross-linkable polymers in accordance with the present invention, thermally reactive side chains capable of reacting with cross-linking agents are composed of substituents incorporating highly reactive portions to cross-linking agents, and such substituents include an acetoacetyl group, a carboxyl group, and a sulfoxyl group. Of these, preferred are the acetoacetyl group and the carboxyl group.
Synthetic methods of the cross-linkable polymers of the present invention are not limited to the above, but include a method in which the above photo cross-linkable side chains are introduced into polyvinyl acetate-saponified products incorporating thermally reactive side chains. Specific examples of polyvinyl acetate-saponified products incorporating thermally reactive side chains include polyvinyl alcohol modified with an acetoacetyl group, such as the GOSEFYMER Z SERIES (produced by Nippon Synthetic Chemical Industry Co., Ltd.), anionic polyvinyl alcohols such as KURARAY K POLYMER SERIES (produced by Kuraray Co., Ltd.), and polyvinyl alcohols modified via a highly active carbonyl group such as the D POLYMER SERIES (produced by Japan VAM & Poval Co., Ltd.).

The content of such cross-linkable polymer is preferably 0.8 - 5.0% by weight with respect to the total ink weight. When the content is at least 0.8% by weight, the cross-linking efficiency is enhanced resulting in a rapid increase in viscosity, whereby beading resistance and color bleeding resistance are preferably enhanced. When it is less than 5.0% by weight, in view of ejection properties and ink retention properties, a content of less than 5.0% by weight is preferred since physical properties of ink and the state in the ink head, are not adversely affected.

Upon such an actinic radiation cross-linkable polymer being crosslinked, a cross-linking point may be formed via intra-molecular reaction between or among the side chains belonging to one polymer molecule, or may be formed via inter-molecular reaction between or among the side chains belonging to two or more distinct polymer molecules respectively. However, it is assumed that cross-linking reactions are mostly of inter-molecular reactions with a plurality of polymer molecules, which cause a marked increase in molecular weight of the polymer. Furthermore, since a main chain of the cross-linkable polymer has some extent of molecular weight, the molecular weight increasing effect per photon is markedly great compared to a conventional actinic radiation curing type monomer in which the molecular weight is low and which polymerizes via a chain reaction.
Further, in the conventional actinic energy curing type monomers known in the art, it has been impossible to control the cross-linking points, whereby it has not been possible to regulate physical properties after curing, resulting in a hard and brittle layer. On the other hand, in the cross-linkable polymers in accordance with the present invention, since it is possible to regulate the number of cross-linking points via the length of the main chain and the introduced amount of photo cross-linkable side chains, it is possible to control physical properties of the ink layer corresponding to the recording media for printing and their use.

Further, in inks which employ conventional actinic radiation curing type monomers known in the art, almost all, other than colorants, are composed of curing components, whereby ink dots after curing are raised and image quality based on glossiness is degraded. On the contrary, the cross-linkable polymers in accordance with the present invention result in desired recording characteristics with only a small addition amount, whereby it is possible to prepare ink incorporating drying components resulting in enhancement in image quality and desired fixability after drying.

### (Photopolymerization Initiators and Sensitizers)

In the present invention, it is preferred to incorporate a photopolymerization initiator (including a photosensitizer). The photopolymerization initiator may be dissolved in or dispersed into solvents, or may be chemically bonded to photosensitive resins.

Employed photopolymerization initiators are not particularly limited, and it is possible to employ those known in the art. However, in view of miscibility and reaction efficiency, water-soluble photopolymerization initiators are preferred. Specifically, in view of miscibility with water based solvents, 4-(2-hydroxyethoxy)phenyl(2-hydroxy-2-propyl)ketone (HMPK), thioxanthone ammonium salt (QTX), and benzophenone ammonium salt (ABQ) are preferred.

Further, in view of compatibility with the polymer according to the present invention, more preferred are 4-(2-hydroxyethoxy) phenyl-(2-hydroxy-2-propyl) ketone (n = 1, HMPK, and ethylene oxide addition products (n = 2 - 5) thereof.

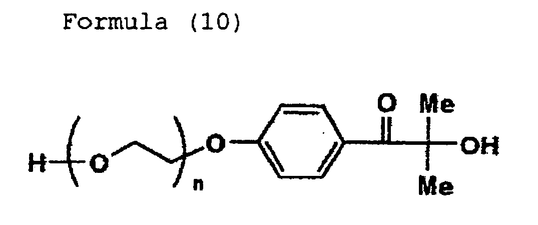

In above Formula (10), n represents an integer of 1 - 5.

Further, examples of other photopolymerization initiators include benzophenones such as benzophenone, hydroxybenzophenone, bis-N,N-dimethylaminobenzophenone, bis-N,N-diethylaminobenzophenone, or 4-methoxy-4'-dimethylaminobenzophenone; thioxanthones such as thioxanthone, 2,4-diethylthioxanthone, isopropylthioxanthone, chlorothioxanthone, or isoproxycycloxanthone; anthraquinones such as ethylanthraquinone, benzanthraquinone, aminoanthraquinone, or chloroanthraquinone; acetophenones; benzoin ethers such as benzoin methyl ether; 2,4,6-trihalomethyltriazines; 1-hydroxycyclohexyl phenyl ketone, 2-(o-chlorophenyl)-4,5-diphenylaimizazole dimers, 2-(o-chlorophenyl)-4,5-di(methoxyphenyl)imidazole dimers, 2-(fluorophenyl)-4,5-phenylimidazole dimers, 2-(o-methoxyphenyl)-4,5-phenylimidazole dimers, 2-(p-methoxyphenyl)-4,5-diphenylimidazole dimers, 2-di(p-methoxyphenyl)-5-phenylimidazole dimers, 2,4,5-triarylimidazole dimers of 2-(2,4-dimethoxyphenyl)-4,5-diphenylimidazole dimers, benzyl methyl ketal, 2-benzyl-2-dimethylamino-1-(4-morpholinophenyl)butane-1-one, 2-methyl -1-[4-(methylthio)phenyl]-2-morpholino-1-prppane, 2-hydroxy-2-methyl-1-phenyl-propane-1-one, 1-[4-(2-hydroxyethoxy)-phenyl]-2-hydroxy-2-methyl-1propane-1-one, phenanthlenequinone, 9,10-phenanthelenequinone; benzoins such as methylbenzoin, or ethyl benzoin; and acridine derivatives such as 9-phenylacridine or 1,7-bis (9,9'-acrydinyl)heptane; and bisacylphosphine oxide; and mixtures thereof. The above compounds may be employed individually or in combinations.

It is possible to incorporate promoters together with these photopolymerization initiators. Examples of such include ethyl p-dimethylaminobenzoate, isoamyl p-dimethylaminobenzoate, ethanolamine, diethanolamine, and triethanolamine.

These photopolymerization initiators may be grafted as side chains for the main chain of the cross-linkable polymer.

### <<Cross-linking Agents>>

It is preferable that the ink of the present invention incorporates a cross-linking agent capable of reacting with the thermally reactive side chains. In the present invention, listed as cross-linking agents capable of reacting with thermally reactive side chains are aldehyde compounds, N-methylol compounds, formamido group containing compounds, hydrazine compounds, amine compounds, epoxy compounds, aziridine compounds, oxazoline compounds, and divalent or higher valent metal salts. Of these, in terms of reactivity, preferred are the hydrazine compounds, the amine compounds, the epoxy compounds, the aziridine compounds, the oxazoline compounds, and divalent or higher valent metal salts.

**No description**

Examples of hydrazine compounds include hydrazine, hydrazine hydrate, hydrazine chloride, inorganic salts such as nitrates, organic salts such as oxalates, mono-substituted hydrazines such as methyl, ethyl, propyl, butyl, allyl, or phenyl-hydrazine, asymmetrical di-substituted hydrazines such as 1,1-dimethyl or 1,1-diethylhydrazine, symmetrical di-substituted hydrazines such as propionic acid hydrazide, salicylic acid hydrazide, adipic acid hydrazide, sebacic acid hydrazide, isophthalic acid hydrazide, and hydrazine compounds such as benzophenonehydorazone.

Examples of the amine compounds include ethylenediamine, propylenediamine, trimethylenediamine, tetramethylenediamine, pentamethylenediamine, hexamethylenediamine, isophoronediamine, dicyclohexylmethane-4,4'-diamine, phenylenediamine, diethylenetriamine, triethylenetetramine, triaminopropane, and polymers having an amino group (for example, polyvinylamine, polyethyleneimine and polyallylamine).

Examples of the epoxy compounds include ethylene glycol diglycidyl ether, polyethylene glycol diglycidyl ether, polypropylene glycol diglycidyl ether, adipic acid diglycidilate, o-phthalic acid diglycidilate, hydroquinone glycidyl ether, bisphenol diglycidyl ether, resorcinol diglycidyl ether, 1,6-hexanediol diglycidyl ether, trimethylolpropane diglycidyl ether, trimethylolpropane triglycidyl ether, neopentylglycol diglycidyl ether, glycerol diglycidyl ether, glycerol triglycidyl ether, sorbitol tetraglycidyl ether, pentaerythritol tetraglycidyl ether, diglycerol glycidyl ether, and triglycidyl-tris(2-hydroxyethyl)isocyanurate).

Examples of aziridine compounds include trimethylopropane-tri-β-azirdinylpropionate, tetramethylolmethane-tri-β-aziridinylpropionate, N,N'-diphenylmethane-4,4'-bis(1-aziridinecarbosamido), N,N'-hexamethylene-1,6'-bis(1-aziridinecarboxamido, and N,N'-toluene-2,4'-bis(1-aziridinecarbosamido).

Examples of the oxazoline compounds include 1,2-oxazolinylethane, 1,4-dioxazolinylbutane, 1,4-dioxazolinylbenzene, N,N'-dioxazolinylethylenediamine, and vinyl polymers having an oxazolinyl group.

Examples of divalent or higher valent metal salts include calcium chloride, calcium sulfate, calcium acetate, calcium propionate, magnesium chloride, magnesium sulfate, zinc chloride, zinc sulfate, zinc acetate, aluminum chloride, aluminum sulfate, aluminum lactate, titanium tetrachloride, titanium lactate, tetraisopropyl titanate, zirconium acetate, zirconium oxychloride, zirconium carbonate ammonium, chromium alum, potassium alum, basic aluminum hydroxide, cobalt chloride, ferrous chloride, ferrous sulfate, ferric chloride, chromium acetate, and barium acetate.

The added amount of these cross-linking agents depends on the type of cross-linking agents and the modification ratio of thermally reactive side chains. The above added amount is preferably in the range of about 0.1 - 40% by weight with respect to the cross-linkable polymer, but is more preferably in the range of 1 - 20% by weight.

### <<Colorants>>

As colorants it is possible to employ various types of dyes or pigments known in the art, employed in the ink-jet ink of the present invention.

### (Dyes)

Employable dyes in the present invention are not particularly limited, and include water-soluble dyes such as acid dyes, direct dyes, or reactive dyes, as well as disperse dyes. Of these, preferred are anionic dyes.

Cited as water-soluble dyes usable in the present invention may, for example, be azo dyes, methine dyes, azomethine dyes, xanthene dyes, quinone dyes, phthalocyanine dyes, triphenylmethane dyes, and diphenylmethane dyes. Specific examples are listed below, however, the present invention is not limited thereto.
<C.I. Acid yellow>
   1, 3, 11, 17, 18, 19, 23, 25, 36, 38, 40, 42, 44, 49, 59, 61, 65, 67, 72, 73, 79, 99, 104, 110, 114, 116, 118, 121, 127, 129, 135, 137, 141, 143, 151, 155, 158, 159, 169, 176, 184, 193, 200, 204, 207, 215, 219, 220, 230, 232, 235, 241, 242, 246,
<C.I. Acid orange>
   3, 7, 8, 10, 19, 24, 51, 56, 67, 74, 80, 86, 87, 88, 89, 94, 95, 107, 108, 116, 122, 127, 140, 142, 144, 149, 152, 156, 162, 166, 168,
<C.I. Acid red> 88, 97, 106, 111, 114, 118, 119, 127, 131, 138, 143, 145, 151, 183, 195, 198, 211, 215, 217, 225, 226, 249, 251, 254, 256, 257, 260, 261, 265, 266, 274, 276, 277, 289, 296, 299, 315, 318, 336, 337, 357, 359, 361, 362, 364, 366, 399, 407, 415,
<C.I. Acid violet>
   17, 19, 21, 42, 43, 47, 48, 49, 54, 66, 78, 90, 97, 102, 109, 126,
<C.I. Acid blue>
   1, 7, 9, 15, 23, 25, 40, 62, 72, 74, 80, 83, 90, 92, 103, 104, 112, 113, 114, 120, 127, 128, 129, 138, 140, 142, 156, 158, 171, 182, 185, 193, 199, 201, 203, 204, 205, 207, 209, 220, 221, 224, 225, 229, 230, 239, 249, 258, 260, 264, 278, 279, 280, 284, 290, 296, 298, 300, 317, 324, 333, 335, 338, 342,
   350,
<C.I. Acid green>
   9, 12, 16, 19, 20, 25, 27, 28, 40, 43, 56, 73, 81, 84, 104, 108, 109,
<C.I. Acid brown>
   2, 4, 13, 14, 19, 28, 44, 123, 224, 226, 227, 248, 282, 283, 289, 294, 297, 298, 301, 355, 357, 413,
<C.I. Acid black>
   1, 2, 3, 24, 26, 31, 50, 52, 58, 60, 63, 107, 109, 112, 119, 132, 140, 155, 172, 187, 188, 194, 207, 222,
<C.I. Direct yellow>
   8, 9, 10, 11, 12, 22, 27, 28, 39, 44, 50, 58, 79, 86, 87, 98, 105, 106, 130,
   132, 137, 142, 147, 153,
<C.I. Direct orange>
   6, 26, 27, 34, 39, 40, 46, 102, 105, 107, 118,
<C.I. Direct red>
   2, 4, 9, 23, 24, 31, 54, 62, 69, 79, 80, 81, 83, 84, 89, 95, 212, 224, 225, 226, 227, 239, 242, 243, 254,
<C.I. Direct violet>
   9, 35, 51, 66, 94, 95,
<C.I. Direct blue>
   1, 15, 71, 76, 77, 78, 80, 86, 87, 90, 98, 106, 108, 160, 168, 189, 192, 193, 199, 200, 201, 202, 203, 218, 225, 229, 237, 244, 248, 251, 270, 273, 274, 290, 291,
<C.I. Direct green>
   26, 28, 59, 80, 85,
<C.I. Direct brown>
   44, 106, 115, 195, 209, 210, 222, 223,
<C.I. Direct black>
   17, 19, 22, 32, 51, 62, 108, 112, 113, 117, 118, 132, 146, 154, 159, 169,
<C.I. Basic yellow>
   1, 2, 11, 13, 15, 19, 21, 28, 29, 32, 36, 40, 41, 45, 51, 63, 67, 70, 73, 91,
<C.I. Basic orange>
   2, 21, 22,
<C.I. Basic red>
   1, 2, 12, 13, 14, 15, 18, 23, 24, 27, 29, 35, 36, 39, 46, 51, 52, 69, 70, 73, 82, 109,
<C.I. Basic violet>
   1, 3, 7, 10, 11, 15, 16, 21, 27, 39,
<C.I. Basic blue>
   1, 3, 7, 9, 21, 22, 26, 41, 45, 47, 52, 54, 65, 69, 75, 77, 92, 100, 105, 117, 124, 129, 147, 151,
<C.I. Basic green>
   1, 4,
<C.I. Basic brown>
   1,
<C.I. Reactive yellow>
   2, 3, 7, 15, 17, 18, 22, 23, 24, 25, 27, 37, 39, 42, 57, 69, 76, 81, 84, 85, 86, 87, 92, 95, 102, 105, 111, 125, 135, 136, 137, 142, 143, 145, 151, 160, 161, 165, 167, 168, 175, 176,
<C.I. Reactive orange>
   1, 4, 5, 7, 11, 12, 13, 15, 16, 20, 30, 35, 56, 64, 67, 69, 70, 72, 74, 82, 84, 86, 87, 91, 92, 93, 95, 107,
<C.I. Reactive red>
   2, 3, 5, 8, 11, 21, 22, 23, 24, 28, 29, 31, 33, 35, 43, 45, 49, 55, 56, 58, 65, 66, 78, 83, 84, 106, 111, 112, 113, 114, 116, 120, 123, 124, 128, 130, 136, 141, 147, 158, 159, 171, 174, 180, 183, 184, 187, 190, 193, 194, 195, 198,
   218, 220, 222, 223, 228, 235,
<C.I. Reactive violet>
   1, 2, 4, 5, 6, 22, 23, 33, 36, 38,
<C.I. Reactive blue>
   2, 3, 4, 5, 7, 13, 14, 15, 19, 21, 25, 27, 28, 29, 38, 39, 41, 49, 50, 52, 63, 69, 71, 72, 77, 79, 89, 104, 109, 112, 113, 114, 116, 119, 120, 122, 137, 140, 143, 147, 160, 161, 162, 163, 168, 171, 176, 182, 184, 191, 194, 195, 198, 203, 204, 207, 209, 211, 214, 220, 221, 222, 231, 235, 236,
<C.I. Reactive green>
   8, 12, 15, 19, 21,
<C.I. Reactive brown>
   2, 7, 9, 10, 11, 17, 18, 19, 21, 23, 31, 37, 43, 46,
<C.I. Reactive black>
   5, 8, 13, 14, 31, 34, 39,
<C.I. Food black>
   1, 2.

Further listed as dyes are the compounds represented by following Formula (8) or (9).

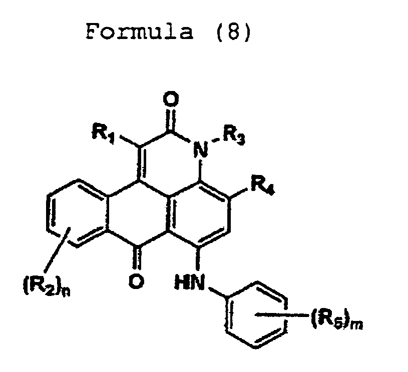

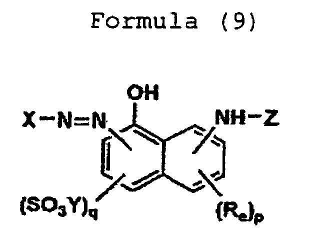

In above Formula (8), R₁ represents a hydrogen atom or a substituent which can be substituted, and a hydrogen atom or a phenylcarbonyl group is preferred. R₂ may be the same or different, and represents a hydrogen atom or a substituent which can be substituted, of which a hydrogen atom is preferred. R₃ represents a hydrogen atom or a substituent which can be substituted, but is preferably a hydrogen atom or an alkyl group. R₄ represents a hydrogen atom or a substituent which can be substituted, but is preferably a hydrogen atom or an aryloxy group. R₅ may be the same or different, and represents a hydrogen atom or a substituent which can be substituted, of which a sulfonic acid group is preferred.

In above Formula (9), X represents a phenyl group or a naphthyl group, which may be substituted with a substituent which may be substituted, and is preferably substituted with a sulfonic acid group or a carboxyl group. Y represents a hydrogen ion, a sodium ion, a potassium ion, a lithium ion, an ammonium ion, or an alkyl ammonium ion. R6 may be different and represents a hydrogen atom or a substituent which may be substituted on a naphthalene ring. "q" represents 1 or 2, while "p" represents an integer of 1 - 4, and p + q must equal 5. Z represents a substituent which may be substituted, and represents a carbonyl group, a sulfonyl group, or the group represented by following Formula (10), which is most preferred.

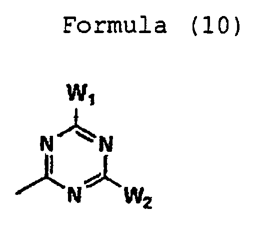

In above Formula (10), W₁ and W₂ may differ and each represents a halogen atom, an amino group, a hydroxyl group, an alkylamino group, or an arylamino group, of whick preferred are the halogen atom, the hydroxyl group, or the alkylamino group.

### (Disperse Dyes)

Employed as disperse dyes may be various ones such as azo based disperse dyes, quinone based disperse dyes, antharaquinone based disperse dyes, or quinophthalone based disperse dyes, and specific compounds thereof are listed below.
<C.I.Disperse Yellow>
   3, 4, 5, 7, 9, 13, 23, 24, 30, 33, 34, 42, 44, 49, 50, 51, 54, 56, 58, 60, 63, 64, 66, 68, 71, 74, 76, 79, 82, 83, 85, 86, 88, 90, 91, 93, 98, 99, 100, 104, 108, 114, 116, 118, 119, 122, 124, 126, 135, 140, 141, 149, 160, 162, 163, 164, 165, 179, 180, 182, 183, 184, 186, 192, 198, 199, 202, 204, 210, 211, 215, 216, 218, 224, 227, 231, 232,
<C.I.Disperse Orange>
   1, 3, 5, 7, 11, 13, 17, 20, 21, 25, 29, 30, 31, 32, 33, 37, 38, 42, 43, 44, 45, 47, 48, 49, 50, 53, 54, 55, 56, 57, 58, 59, 61, 66, 71, 73, 76, 78, 80, 89, 90, 91, 93, 96, 97, 119, 127, 130, 139, 142,
<C.I.Disperse Red>
   1, 4, 5, 7, 11, 12, 13, 15, 17, 27, 43, 44, 50, 52, 53, 54, 55, 56, 58, 59, 60, 65, 72, 73, 74, 75, 76, 78, 81, 82, 86, 88, 90, 91, 92, 93, 96, 103, 105, 106, 107, 108, 110, 111, 113, 117, 118, 121, 122, 126, 127, 128, 131, 132, 134, 135, 137, 143, 145, 146, 151, 152, 153, 154, 157, 159, 164, 167, 169, 177, 179, 181, 183, 184, 185, 188, 189, 190, 191, 192, 200, 201, 202, 203, 205, 206, 207, 210, 221, 224, 225, 227, 229, 239, 240, 257, 258, 277, 278, 279, 281, 288, 298, 302, 303, 310, 311, 312, 320, 324, 328,
<C.I.Disperse Violet>
   1, 4, 8, 23, 26, 27, 28, 31, 33, 35, 36, 38, 40, 43, 46, 48, 50, 51, 52, 56, 57, 59, 61, 63, 69, 77,
<C.I.Disperse Green>
   9,
<C.I.Disperse Brown>
   1, 2, 4, 9, 13, 19,
<C.I.Disperse Blue>
   3, 7, 9, 14, 16, 19, 20, 26, 27, 35, 43, 44, 54, 55, 56, 58, 60, 62, 64, 71, 72, 73, 75, 79, 81, 82, 83, 87, 91, 93, 94, 95, 96, 102, 106, 108, 112, 113, 115, 118, 120, 122, 125, 128, 130, 139, 141, 142, 143, 146, 148, 149, 153, 154, 158, 165, 167, 171, 173, 174, 176, 181, 183, 185, 186, 187, 189, 197, 198, 200, 201, 205, 207, 211, 214, 224, 225, 257, 259, 267, 268, 270, 284, 285, 287, 288, 291, 293, 295, 297, 301, 315, 330, 333,
<C.I.Disperse Black>
   1, 3, 10, 24

The dyes listed above are described in "Senshoku Note Dai 21 Han (Dying Notes 21th Edition)" (published by Shikisen Co.).

Employed as pigments usable in the present invention may be conventional organic or inorganic pigments known in the art. Examples include azo pigments such as azo lakes, insoluble azo pigments, condensed azo pigments, or chelate azo pigments; polycyclic pigments such as phthalocyanine pigments, perylene and perylene pigments, antharaquinone pigments, quinacridone pigments, dioxazine pigments, thioindigo pigments, iso-indolinone pigments, or quinophtahrony pigments; dye lakes such as basic dye type lakes or acidic dye type lakes; organic pigments such as nitro pigments, nitroso pigments, aniline black, or daylight fluorescent pigments, and inorganic pigments such as carbon black.

Specific organic pigments are exemplified below.

Listed as pigments for magenta or red are C.I. Pigment Red 2, C.I. Pigment Red 3, C.I. Pigment Red 5, C.I. Pigment Red 6, C.I. Pigment Red 7, C.I. Pigment Red 15, C.I. Pigment Red 16, C.I. Pigment Red 48 : 1, C.I. Pigment Red 53 : 1, C.I. Pigment Red 57 : 1, C.I. Pigment Red 122, C.I. Pigment Red 123, C.I. Pigment Red 139, C.I. Pigment Red 144, C.I. Pigment Red 149, C.I. Pigment Red 166, C.I. Pigment Red 177, C.I. Pigment Red 178, C.I. and Pigment Red 222.

Listed as pigments for orange or yellow are C.I. are Pigment Orange 31, C.I. Pigment Orange 43, C.I. Pigment Yellow 12, C.I. Pigment Yellow 13, C.I. Pigment Yellow 14, C.I. Pigment Yellow 15, C.I. Pigment Yellow 17, C.I. Pigment Yellow 74, C.I. Pigment Yellow 93, C.I. Pigment Yellow 94, C.I. Pigment Yellow 128, C.I. Pigment Yellow 138 and C.I. Pigment Yellow 150.

Listed as pigments for green or cyan are C.I. Pigment Blue 15, C.I. Pigment Blue 15 : 2, C.I. Pigment Blue 15 : 3, C.I. Pigment Blue 16, C.I. Pigment Blue 60, and C.I. Pigment Green 7.

Listed as methods for dispersing pigments are those employing various homogenizers such as a ball mill, a sand mill, an attritor, a roller mill, an agitator, a Henschel mixer, a colloid mill, an ultrasonic homogenizer, a pearl mill, a wet system jet mill, or a paint shaker.

In the ink of the present invention, it is possible to preferably employ self-dispersed pigments in which polar groups such as sulfonic acid or carboxylic acid hang on the surface of pigments, or pigments which are dispersed employing polymer dispersing agents.

Polymer dispersing agents, usable in the present invention, are not particularly limited, and water-soluble or water-insoluble resins may be employed. Listed as such polymers may, for example, be homopolymers of one type of monomer, copolymers of at least two types of monomers selected from styrene, styrene derivatives, vinylnaphthalene derivatives, acrylic acid, acrylic acid derivatives, methacrylic acid, methacrylic acid derivatives, maleic acid, maleic acid derivatives, itaconic acid, itaconic acid derivatives, fumaric acid, fumaric acid derivatives, and salts thereof. Further, it is possible to employ water-soluble polymers such as polyvinyl alcohol, polyvinylpyrrolidone, cellulose derivatives, gelatin, or polyethylene glycol.

The content of these water-soluble resins is preferably 0.1 - 10% by weight with respect to the total ink, but is more preferably 0.3 - 5% by weight. Further, these water-soluble resins may be employed in combinations of at least two types.

The average particle diameter of the pigment dispersion employed in the ink-jet ink according to the present invention is preferably at most 500 nm, is more preferably at most 200 nm, is still more preferably 10 - 200 nm, but is most preferably 10 - 150 nm. When the average particle diameter of the pigment dispersion is from 10 nm to 500 nm, an ink having good dispersion stability can be produced.

It is possible to determine the particle diameter of a pigment dispersion employing commercial particle size meters employing a light scattering method, an electrophoresis method, or a laser Doppler method. Alternatively, images of at least 100 particles are captured by a transmission type electron microscope, and the captured images are statistically treated employing an image analysis software such as IMAGE-PRO (produced by Media Cybernetics), whereby it is possible to obtain the particle diameter.

### <Water-soluble organic solvents>

Water-soluble organic solvents utilizable in this invention include, for example, alcohols (such as methanol, ethanol, propanol, isopropanol, butanol, isobutanol, secondary butanol, tertiary butanol, pentanol, hexanol, cyclohexanol and benzyl alcohol), polyhydric alcohols (such as ethylene glycol, diethylene glycol, triethylene glycol, polyethylene glycol, propylene glycol, dipropylene glycol, polypropylene glycol, butylene glycol, hexanediol, pentanediol, glycerin, hexanetriol and thiodiglycol), polyhydric alcohol ethers (such as ethylene glycol monomethylether, ethylene glycol monoethylether, ethylene glycol monobutylether, diethylene glycol monomethylether, diethylene glycol monoethylether, diethylene glycol monobutylether, propylene glycol monomethylether, propylene glycol monobutylether, ethylene glycol monomethylether acetate, triethylene glycol monomethylether, triethylene glycol monoethylether, triethylene glycol monobutylether, ethylene glycol monophenylether and propylene glycol monophenylether), amines (such as ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethyleneimine, pentamethyl diethyltriamine and tetramethyl propylenediamine), amides (such as formamide, N,N-dimethyl formamide and N,N-dimethylacetoamide), heterocyclic rings (such as 2-pyrrolidone, N-methyl-2-pyrrolidone, cyclohexyl pyrrolidone, 2-oxazolidone, 1,3-dimethyl-2-imidazolydinone), sulfoxides (such as dimethylsulfoxide).

### <Surface active agents>

Surface active agents usable in the present invention are not particularly limited, listed examples being anionic surface active agents such as dialkylsulfosuccinic acid salts, alkylnaphthalenesulfonic acid salts, or fatty acid salts; nonionic surface active agents such as polyoxyethylene alkyl ethers, polyoxyethylene alkyl allyl ethers, acetylene glycols, or polyoxyethylene-polyoxypropylene block copolymers; and cationic surface active agents such as alkylamines or quaternary ammonium salts.

The above-described surface active agents can be used for dispersing pigments. Of these, particularly preferably employed are anionic surface active agents and nonionic.

### <Various Additives>

Other than each of the above additives, it is possible to incorporate in the ink-jet ink according to the present invention conventional additives known in the art. Examples include optical brightening agents, defoamers, lubricants, antiseptics, thickening agents, antistatic agents, matting agents, water-soluble polyvalent metal salts, acid-bases, pH controlling agents such as a buffer, antioxidants, surface tension controlling agents, resistivity controlling agents, anticorrosives, and inorganic pigments.

### <<Physical Properties of Ink>>

### (Viscosity)

Viscosity of the ink-jet ink of the present invention is not particularly limited, but it is preferably 2 - 15 mPa·s at 25 °C. Further, it is preferable that the viscosity of the ink-jet ink of the present invention is independent of a share rate.

Ink viscosity (mPa.s), as described in the present invention, is not particularly limited as long as it is determined employing the viscometer correcting standard solutions specified in JIS Z 8809, and refers to a viscosity value determined at 25 °C, based on methods known in the art. Employed as a viscometer may be those of a rotary type, a vibration type, or a capillary type. For example, it is possible to determine the viscosity, employing a SAYBOLT viscosimeter or a REDWOOD viscosimeter. Examples include a CONICAL FLAT PLATE TYPE E TYPE VISCOMETER, produced by TOKIMES Inc., an E TYPE VISCOMETER (being a rotary viscometer), produced by Toki Sangyo Co., a B TYPE VISCOMETER BL, produced by Tokyo Keiki Co., Ltd., an FVM-81A, produced by Yamaichi Electronics Co., Ltd.), a VISCOLINER, produced by Nametore Kogyo Co., and a VISCO MATE Model VM-1A and DD-1, produced by Yamaichi Electronics Co., Ltd.

### (Surface Tension)

Further, surface tension of the ink-jet ink of the present invention is preferably at most 35 mN/m, but is more preferably 20 - 35 mN/m.

Surface tension (mN/m), as described in the present invention, refers to values determined at 25 °C. The measurement methods are described in common surface chemistry and colloid chemistry reference books. For example, reference can be made to pages 68 - 117 of Shin-Zikkenkagaku Koza Dai 18 Kan (Kaimen to Colloid) (Lecture of New Experimental Chemistry, Volume 18 (Surface and Colloid))", edited by Nihon Kagaku Kai, published by Maruzen. In practice, it is possible to determine surface tension employing a ring method (being the Du Nouy method) or a platinum plate method (being the Wilhelmy method). In the present invention, the surface tension is represented by the value (mN/m) determined employing the platinum plate method and as a surface tension balance, employed was a SURFACE TENSION BALANCE CBVP-Z, produced by Kyowa Kaimen Kagaku Co.

### (Degassing)

The dissolved oxygen concentration in the ink-jet ink of the present invention is preferably at most 2 ppm, but is more preferably at most 1 ppm. When the dissolved oxygen concentration in the ink-jet ink is at most 2 ppm, cavitation rarely occurs during ink ejection whereby it is easy to produce ink exhibiting desired ejection properties.

Methods to control the dissolved oxygen concentration are not particularly limited, and include a method in which ink-jet ink is degassed under vacuum, a method in which degassing is carried out via exposure to ultrasonic waves, and a method in which a hollow fiber membrane for degassing is employed, as described in JP-A No. 11-209670. Of these, degassing employing the hollow fiber membrane is particularly preferred.

### <<Recording Media>>

As recording media usable for the ink-jet recoding method employing the ink of the present invention, various types of recording media may be employed. For example, listed may be paper, plastic films, metals, fabrics, and rubber. Of these, preferred as ink-jet recording media for the use of common image formation are paper and plastic films.

Paper includes coated paper and non-coated paper. Coated paper includes art paper in which the coated amount on one side is approximately 20 g/m², coated paper in which the coated amount on one side is approximately 10 g/m²*,* light weight coated paper in which the coated amount on one side is approximately 5 g /m², ultra light weight coated paper, matte finished coated paper, double tone finished double coated paper, and newsprint paper. Non-coated paper includes printing paper A employing 100 percent chemical pulp, printing paper B employing at least 70 percent chemical pulp, printing paper C employing from 40 to 70 percent chemical pulp, printing paper D employing at most 40 percent chemical pulp, and gravure paper which incorporates mechanical pulp and has been subjected to calendering. More detailed reference will be made to "Saishin Kamikako Binran (Handbbok of Recent Paper Treatments)", edited by Kako Binran Henshuiinkai Hen, published by Tech Times and "Insatsu Kogaku Binran (Printing Engineering Handbook)", edited by Nihon Insatsu Gakkai.

Employed as plain paper, are 80 - 200 µm thick non-coated paper which belongs to a part of non-coated paper sheets, special printing paper sheets, and information sheets. Examples include high quality printing paper, medium quality printing paper, and low quality printing paper, thin printing paper, ultra-thin printing paper, or special printing paper such as high quality colored paper, form paper sheets, PPC sheets, and other kinds such as information sheets. Specifically, available are the paper sheets described below and various modified/treated paper sheets, but the present invention is not limited thereto.
Listed are HIGH QUALITY PAPER, HIGH QUALITY COLORED PAPER, RECYCLED PAPER, COPYING PAPER/COLOR, OCR PAPER, NON-CARBON PAPER/SYNTHETIC PAPER such as UPO 60, 80, and 110 MICRON, or UPOCOAT 70 and 90 MICRON, others such as ONE SIDE ART PAPER 68 kg, COATED PAPER 90 kg, MATTE FORM PAPER 70, 90, and 110 kg, FOAMED PET 38 micron, and MITSUORIKUN (all available from Kobayashi Kirokushi Co., Ltd.), OK HIGH QUALITY PAPER, NEW OK HIGH QUALITY PAPER, SUN FLOWER, PHOENIX, OK ROYAL WHITE, HIGH QUALITY EXPORT PAPER (NPP, NCP, NWP, and ROYAL WHITE), OK BOOK PAPER, OK CREAM BOOK PAPER, CREAM HIGH QUALITY PAPER, OK MAP PAPER, OK ISHIKARI, KYUUREI, OK FORM, OKH, and NIP-N (all available from Shin-Oji Paper Co., Ltd.); KINO, TOKO, EXPORT HIGH QUALITY PAPER, SPECIAL DEMAND HIGH QUALITY PAPER, BOOK PAPER, BOOK PAPER L, PALE CREAM BOOK PAPER, PRIMARY SCHOOL SCIENCE TEXT BOOK PAPER, CONTINUOUS SLIP PAPER, HIGH QUALITY NIP PAPER, GINKAN, KINYO, KINYO (W), BRIDGE, CAPITAL, GINKAN BOOK PAPER, HARP, HARP CREAM, SK COLOR, SECURITY PAPER, OPERA CREAM, OPERA, KYP CARTE, SYLVIA HN, EXCELLENT FORM, and NPI FORM DX (all available from Nippon Paper Co., Ltd.); PEARL, KINRYO, PALE CREAM HIGH QUALITY PAPER, SPECIAL BOOK PAPER, SUPER BOOK PAPER, DIAFORM, and INK-JET FORM (all available from Mitsubishi Paper Mills Ltd.); KINMO V, KINMO SW, HAKUZO, HIGH QUALITY PUBLISHING PAPER, CREAM KINMO, CREAM HAKUZO, SECURITY/TRADABLE COUPON PAPER, BOOK PAPER, MAP PAPER, COPY PAPER, and HNF (all available from Hokuetsu Paper Mills, Ltd.); SIORAI, TELEPHONE DIRECTORY COVER, BOOK PAPER, CREAM SHIORAI, CREAM SHIORAI MEDIUM ROUGH, CREAM SHIORAI HIGH ROUGH, and DSK (all available from Daishowa Paper Manufacturing Co., Ltd.); SENDAI MP HIGH QUALITY PAPER, KINKO, RAICHO HIGH QUALITY, HANGING PAPER, COLORED PAPER BASE PAPER, DICTIONARY PAPER, CREAM BOOK, WHITE BOOK, CREAM HIGH QUALITY PAPER, MAP PAPER, and CONTINUOUS SLIP PAPER (Chuetsu Paper & Pulp Co., Ltd.); OP KINO (CHUETSU), KINSA, REFERENCE PAPER, TRADABLE COUPON PAPER (WHITE)), FORM PRINTING PAPER, KRF, WHITE FORM, COLOR FORM, (K)NIP, FINE PPC, and KISHU INK-JET PAPER (all produced by Kishu Paper Co., Ltd.); TAIOU, BRIGHT FORM, KANT, KANT WHITE, DANTE, CM PAPER, DANTE COMIC, HEINE, PAPER BACKS PAPER, HEINE S, NEW AD PAPER, UTRILLO EXCEL, EXCEL SUPER A, KANTO EXCEL, EXCEL SUPER B, DANTE EXCEL, HEINE EXCEL, EXCEL SUPER C, EXCEL SUPER D, AD EXCEL, EXCEL SUPER E, NEW BRIGHT FORM, and NEW BRIGHT NIP (all available from Daio Paper Corporation); NICHIRIN, GETSURIN, UNREI, GINGA, HAKUUN, WAISU, GETURIN ACE, HAKUUN ACE, and UNKIN ACE (all produced by Japan Paper Industry Co., Ltd.); TAIOU, BRIGHT FORM and BRIGHT NIP (all avaialbew from Nagoya Pulp Co., Ltd.); BOTAN A, KINBATO, TOKU BOTAN, SHIROBOTAN A, SHIROBOTAN C, GINBATO, SUPER SHIROBOTAN A, PALE CREAM SHIROBOTAN, SPECIAL MEDIUM QUALITY PAPER, SHIROBATO, SUPER MEDIUM QUALITY PAPER, AO BATO, AKA BATO, KIN BATO M SNOW VISION, KIN BATO SNOW VISION, SHIRO BATO M, SUPER DX, HANAMASU 0, AKA BATO M, and HK SUPER PRINTING PAPER (all manufactured by Honshu Paper Co., Ltd.); STAR LINDEN (A.AW), STAR ELM, STAR MAPLE, STAR LAUREL; STAR POPLAR, MOP, STAR CHERRY I, CHERRY I SUPER, CHERRY II SUPER, STAR CHERRY III, STAR CHERRY IV, CHERRY III SUPER, and CHERRY IV SUPER (all produced by Marusumi Paper Co., Ltd.); SHF (produced by Toyo Pulp Co., Ltd.); and TRP (produced by Tokai Pulp Co., Ltd.).

Further, employed as non-absorptive media may be any of the various films commonly employed. Examples include polyester film, polyolefin film, polyvinyl chloride film, and polyvinylidene chloride film. Further employed may be resin coated paper (RC paper prepared by covering both sides of a paper substrate with olefin resins) and YUPO paper, which is synthetic medium.

Further, various ink-jet recording media are prepared in such a manner that an absorptive or non-absorptive support is employed as a substrate and an ink receptive layer is formed on its surface. Some of ink receptive layers are composed of a coated layer, a swelling layer, and a minute void layer. The swelling layer absorbs ink while an ink receptive layer composed of water-soluble polymers swells. The minute void layer is composed of minute inorganic or organic particles of a secondary particle diameter of about 20 - about 200 nm, and binders, and minute voids of about 100 nm absorb ink.

A swelling layer absorbs ink in such a manner that an ink receptive layer composed of water-soluble polymers swells. A minute void layer is composed of minute inorganic or organic particles at a diameter of the secondary particles of 20 - 200 nm and binders, and minute voids at about 100 nm absorb ink. In recent years, to produce photographic images, preferably employed as a substrate, are ink-jet recording media in which the above minute void layer is provided on RC paper which is prepared by covering both sides of a paper substrate with olefin resins.

### (Actinic Radiation and Exposure Method)

In the image forming method of the present invention, ink, incorporating the cross-linkable polymer, is ejected onto a recording medium to form images, which are subsequently cured under exposure to actinic radiation.

The methods for irradiating actinic rays to the ink-jet ink are explained below.

Actinic radiation, as described in the present invention, includes, for example, electron beams, ultraviolet rays, α rays, β rays, γ rays, and X rays. In view of danger to the human body, ease of handling, and wide industrial application, preferred are electron beams and ultraviolet rays.

When electron beams are employed, their exposure amount is preferably in the range of 0.1 - 30 Mrad. When the exposure amount is less than 0.1 Mrad, desired exposure effects are not sufficiently realized, while when it exceeds 30 Mrad, recording media may be degraded. Therefore, the radiation amount beyond the above range is not preferred.

When ultraviolet rays are employed, employed are conventional radiation sources such as low, medium, or high pressure mercury lamps exhibiting a driving pressure of 0.1 kPa - 1 MPa, metal halide lamps, xenon lamps emitting radiation in the ultraviolet region, cold cathode tubes, hot cathode tubes, or LEDs.

### (Radiation Exposure Conditions after Ink Deposition)

As exposure conditions of actinic radiation, it is preferable that actinic radiation is exposed within 0.001 - 1.0 second after deposition of ink droplets onto a recording medium, but is it more preferable that it is exposed within 0.001 - 0.5 second after the same. In order to form highly detailed images, it is critical that the exposure timing is early as possible.

### (Arrangement of Lamps)

A basic actinic radiation exposure method is disclosed in JP-A No. 60-132767. Accordong to it, exposure radiation sources are arranged on both sides of the ink-jet head unit, and the ink-jet head and the exposure radiation source are scanned via a shuttle system. Exposure is carried out a definite duration after deposition of ink droplets. Further, a method is known in which curing is completed employing another radiation source which is not accompanied with drive. For example, U.S. Patent No. 6,145,979 discloses a method in which, as an exposure method, optical fibers are employed, and a collimated radiation beam is incident to a mirror surface arranged on the head unit side and actinic radiation is exposed to the recording section. Employed as image forming methods of the present invention, may be any of the above methods.

Further, the following method is also one of the preferred embodiments. Exposure to actinic radiation is divided into two stages. As a first stage, actinic radiation is exposed in the same manner as above within 0.001 - 2.0 seconds after deposition of ink droplets, followed by exposure to a second actinic radiation. By dividing the exposure to actinic radiation into two stages, it is possible to minimize contraction of the recording medium, which tends to occur during ink curing.

### (Printer Materials)

Preferred as materials employed in the ink-jet printer using the ink-jet recording method of the present invention are those which exhibit low transmission and reflection of actinic radiation such as ultraviolet radiation to minimize exposure to the head surface due to diffused reflection.

Further, it is preferable that the exposure unit is fitted with a shutter. For example, when ultraviolet radiation is employed, the illuminance ratio during opening and closing of the shutter is preferably at least 10 in terms of closed shutter/opened shutter, is more preferably at least 100, but is further more preferably at least 10,000.

The ink-jet printer employed in the ink-jet image recording method of the present invention will now be described.

### (Ink-Jet Printer)

Cited as an ink-jet printer usable in the present invention is an apparatus which is, for example, provided with a platen which is arranged so that images are horizontally formed and holds the rear surface (being the surface opposite the image forming surface) via suction in the specified range of a recording medium on the upper surface by driving the suction unit, a recording head which ejects ink onto recording media through the ejection orifices of the nozzles, and an exposure means which emits actinic radiation, a carriage which moves in the scanning direction during image formation, a driving circuit-board which is mounted on the carriage and drives the carriage, a guide member which guides the movement of the carriage along the scanning direction, a linear scale which is located in the scanning direction while an optical pattern is arranged in the longitudinal direction, and a linear encoder sensor, arranged on the carriage, which reads the optical pattern arranged in the linear scale and outputs it as clock signals.

In the image forming method of the present invention, employed as an ink-jet head used to eject an ink-jet ink (hereinafter also referred simply to as an ink) may be either an on-demand system or a continuous system. Further listed as an ejection system may be an electrical-mechanical conversion system (for example, a single cavity type, a double cavity type, a vendor type, a piston type, a share mode type, or a shared wall type); an electrical-thermal conversion system (for example, a thermal ink-jet type and BUBBLE JET (a registered trade name) type); an electrostatic suction system (for example, an electric field control type); and a discharge system (for example, a spark jet type). Of these, preferred is the electrical-mechanical conversion system.

### EXAMPLE

The present invention will now be specifically described with reference to examples, however the present invention is not limited thereto. In these examples, "parts" or "%" is used and represents "parts by weight" or "% by weight", unless otherwise specified.

### <<Synthesis of Cross-linkable Polymers>>

### (Synthesis of Cross-linkable Polymer 1)

Charged into a reaction vessel were 56 g of glycidyl methacrylate, 48 g of p-hydroxybenzaldehyde, 2 g of pyridine, and 1 g of N-nitroso-phenylhydroxyamine ammonium salt, and the resulting mixture was stirred for 8 hours in an 80 °C water bath. After cooling to room temperature, 100 g of a 5% by weight aqueous sodium carbonate solution was added and the resulting mixture was stirred for one hour and extraction was carried out employing ethyl acetate. The resulting ethyl acetate was distilled off employing an evaporator, whereby p-(3-methacryl-2-hydroxypropyloxy)benzaldehyde was prepared.

Subsequently, after dissolving 30 g of acetoacetyl-modified polyvinyl alcohol at a saponification ratio of 99 mol% (Z200, produced by Nippon Synthetic Chemical Industry Co., Ltd.) in 225 g of ion-exchanged water, 4.5 g of phosphoric acid and p-(3-methacryloxy-2-hydroxypropyloxy)benzaldehyde prepared in the above reaction, which was a precursor of photo cross-linkable side chains were added to the resulting solution under conditions in which the modification ratio reached 3.0 mol%, and the resulting mixture was stirred at 90 °C for 6 hours. After cooling the resulting solution to room temperature, 30 g of basic ion exchange resins was added, followed by stirring for one hour. Subsequently, the ion exchange resins were collected via filtration and, IRUGACURE 2959 (produced by Ciba Specialty Chemicals Co.) as a photopolymerization initiator was blended at a ratio of 0.1 g with respect to 100 g of the above aqueous solution. Thereafter, the resulting mixture was diluted by the addition of ion-exchanged water, whereby a 10% aqueous Cross-linkable Polymer 1 solution was prepared. Cross-linkable Polymer 1 is a polymer which is a saponified polyvinyl acetate product having, on the main chain, photo cross-linkable side chains capable of undergoing cross-linking among the side chains upon exposure to actinic radiation and thermally reactive side chains capable of reacting with cross-linking agents.

### (Synthesis of Cross-linkable Polymer 2)

A 10% aqueous Cross-linkable Polymer 2 solution was prepared in the same manner as above, except that in the synthesis of above Cross-linkable Polymer 1, the modification ratio of the photo cross-linkable side chains of the saponified polyvinyl acetate product was changed to 0.4 mol%. Cross-linkable Polymer 2 is a polymer which is a saponified polyvinyl acetate product having, on the main chain, photo cross-linkable side chains capable of undergoing cross-linking among the side chains upon exposure to actinic radiation and thermally reactive side chains capable of reacting with cross-linking agents.

### (Synthesis of Cross-linkable Polymer 3)

A 10% aqueous Cross-linkable Polymer 3 solution was prepared in the same manner as above, except that in the synthesis of above Cross-linkable Polymer 1, the modification ratio of the photo cross-linkable side chains of the saponified polyvinyl acetate product was changed to 4.5 mol%. Cross-linkable Polymer 3 is a polymer which is a saponified polyvinyl acetate product having, on the main chain, photo cross-linkable side chains capable of undergoing cross-linking among the side chains upon exposure to actinic radiation and thermally reactive side chains capable of reacting with cross-linking agents.

### (Synthesis of Cross-linkable Polymer 4)

A 10% aqueous Cross-linkable Polymer 4 solution was prepared in the same manner as above, except that in the synthesis of above Cross-linkable Polymer 1, acetoacetyl-modified polyvinyl alcohol at a saponification ratio of 85 - 90 mol% was replaced with anionic polyvinyl alcohol (PVA KL318, produced by Kuraray Co., Ltd.). Cross-linkable Polymer 4 is a polymer which is a saponified polyvinyl acetate product having, on the main chain, photo cross-linkable side chains capable of undergoing cross-linking among the side chains upon exposure to actinic radiation and thermally reactive side chains capable of reacting with cross-linking agents.

### (Synthesis of Cross-linkable Polymer 5)

A 10% aqueous Cross-linkable Polymer 5 solution was prepared in the same manner as above, except that in the synthesis of above Cross-linkable Polymer 1, acetoacetyl-modified polyvinyl alcohol was replaced with diacetoneacrylamido-modifed polyvinyl alcohol (D700, produced by UNITIKA Ltd.). Cross-linkable Polymer 5 is a polymer which is a saponified polyvinyl acetate product having, on the main chain, photo cross-linkable side chains capable of undergoing cross-linking among the side chains upon exposure to actinic radiation and thermally reactive side chains capable of reacting with cross-linking agents.

### (Monomer 1)

Ethylene oxide-added 1,6-hexanediol acrylate was designated as Monomer 1.

### (Monomer 2)

A compound, 3-methoxybutyl acrylate, was designated as Monomer 2.

### (Synthesis of Cross-linkable Polymer 6)

A 10% aqueous Cross-linkable Polymer 6 solution was prepared in the same manner as above, except that in the synthesis of above Cross-linkable Polymer 1, acetoacetyl-modified polyvinyl alcohol was replaced with a polyvinyl acetate-saponified product at a degree of polymerization of 500 and a saponification ratio of 88%. Cross-linkable Polymer 6 is a polymer which is a saponified polyvinyl acetate product having, on the main chain, photo cross-linkable side chains capable of undergoing cross-linking among the side chains via exposure to actinic radiation.

### <<Preparation of Pigment Dispersion>>

### (Yellow Pigment Dispersion)

The following additives were mixed, and the resulting mixture was dispersed employing a sand grinder loaded with 0.5 mm zirconia beads at a volume ratio of 50%, whereby a yellow pigment dispersion at a yellow pigment content of 10% was prepared.

| | |
|---|---|
| C. I. Pigment Yellow 74 | 95 g |
| DEMOL C (produced by Kao Corp.) | 65 g |
| Ethylene glycol | 100 g |
| Ion-exchanged water | 120 g |

### (Preparation of Magenta Pigment Dispersion)

The following additives were mixed, and the resulting mixture was dispersed employing a sand grinder loaded with 0.5 mm zirconia beads at a volume ratio of 50%, whereby a magenta pigment dispersion at a magenta pigment content of 10% was prepared.

| | |
|---|---|
| C. I. Pigment Red 122 | 10 g |
| JOHNCRYL 61 (being a acryl styrene based resin dispersion, produced by Johnson Co.) | 3 g |
| Glycerin | 15 g |
| Ion-exchanged water | 72 g |

### (Cyan Pigment Dispersion)

The following additives were mixed, and the resulting mixture was dispersed employing a sand grinder loaded with 0.5 mm zirconia beads at a volume ratio of 50%, whereby a cyan pigment dispersion at a cyan pigment content of 10% was prepared.

| | |
|---|---|
| C. I. Pigment Blue 15 : 3 | 100 g |
| DEMOL C (described above) | 68 g |
| Ethylene glycol | 100 g |
| Ion-exchanged water | 125 g |

### (Black Pigment Dispersion)

The following additives were mixed, and the resulting mixture was dispersed employing a sand grinder loaded with 0.5 mm zirconia beads at a volume ratio of 50%, whereby a black pigment dispersion at a black pigment content of 10% was prepared.

| | |
|---|---|
| TOKA BLACK #8500 (produced by Tokai Carbon Co., Ltd.) | 120 g |
| JOHNCRYL 62 (produced by Johnson Polymer Co.) | 59 g |
| LEVENOL WX (produced by Kao Corp.) | 3 g |
| Diethylene glycol | 100 g |
| Ion-exchanged water | 300 g |

### <<Preparation of Ink Sets>>

By employing each crosslinkabel polymer and each pigment dispersion prepared as above, pigment type Ink Sets 1 - 10 were prepared using the following method.

### (Preparation of Ink Set 1)

Ink Set 1, composed of Yellow Ink Y1, Magenta Ink M1, Cyan Ink C1, and Black Ink K1, was prepared based on the following procedure.

### (Preparation of Yellow Ink Y1)

| | |
|---|---|
| Yellow pigment dispersion | 30 parts |
| 10% aqueous Cross-linkable Polymer 1 solution | 20 parts |
| Adipic acid hydrazide | 0.1 part |
| Glycerin | 7 parts |
| Ethylene glycol | 15 parts |
| Diethylene glycol monobutyl ether | 2 parts |
| OLFINE e1010 (produced by Nissin Chemical Industry Co., Ltd.) | 0.2 part |

Ion-exchanged water was added to the above mixture to bring the total to 100 parts, whereby Yellow Ink Y1 was prepared.

### (Preparation of Magenta Ink M1)

Magenta Ink M1 was prepared in the same manner as above Yellow Ink Y1, except that the yellow pigment dispersion was replaced with the magenta pigment dispersion.

### (Preparation of Cyan Ink C1)

Cyan Ink C1 was prepared in the same manner as above Yellow Ink Y1, except that the yellow pigment dispersion was replaced with the cyan pigment dispersion.

### (Preparation of Black Ink K1)

| | |
|---|---|
| Black pigment dispersion | 30 parts |
| 10% aqueous Cross-linkable Polymer 1 Solution | 20 parts |
| Adipic acid hydrazide | 0.1 part |
| Glycerin | 7 parts |
| Ethylene glycol | 15 parts |
| Diethylene glycol monobutyl ether | 2 parts |
| OLFIN e1010 (produced by Nissin Chemical Industry Co., Ltd.) | 0.2 part |

Ion-exchanged water was added to the above mixture to bring the total to 100 parts, whereby Black Ink K1 was prepared.

### (Preparation of Ink Set 2)

Ink Set 2, composed of Yellow Ink Y2, Magenta Ink M2, Cyan Ink C2, and Black Ink K2, was prepared based on the following procedure.

### (Preparation of Yellow Ink Y2)

Yellow Ink Y2 was prepared in the same manner as above Yellow Ink Y1, except that the 10% aqueous Cross-linkable Polymer 1 solution was replaced with the 10% aqueous Cross-linkable Polymer 2 solution.

### (Preparation of Magenta Ink M2)

Magenta Ink M2 was prepared in the same manner as above Magenta Ink M1, except that the 10% aqueous Cross-linkable Polymer 1 solution was replaced with the 10% aqueous Cross-linkable Polymer 2 solution.

### (Preparation of Cyan Ink C2)

Cyan Ink C2 was prepared in the same manner as above Cyan Ink C1, except that the 10% aqueous Cross-linkable Polymer 1 solution was replaced with the 10% aqueous Cross-linkable Polymer 2 solution.

### (Preparation of Black Ink K2)

Black Ink K2 was prepared in the same manner as above Black Ink K1, except that the 10% aqueous Cross-linkable Polymer 1 solution was replaced with the 10% aqueous Cross-linkable Polymer 2 solution.

### (Preparation of Ink Set 3)

Ink Set 3, composed of Yellow Ink Y3, Magenta Ink M3, Cyan Ink C3, and Black Ink K3, was prepared based on the following procedure.

### (Preparation of Yellow Ink Y3)

Yellow Ink Y3 was prepared in the same manner as above Yellow Ink Y1, except that the 10% aqueous Cross-linkable Polymer 1 solution was replaced with the 10% aqueous Cross-linkable Polymer 3 solution.

### (Preparation of Magenta Ink M3)

Magenta Ink M3 was prepared in the same manner as above Magenta Ink M1, except that the 10% aqueous Cross-linkable Polymer 1 solution was replaced with the 10% aqueous Cross-linkable Polymer 3 solution.

### (Preparation of Cyan Ink C3)

Cyan Ink C3 was prepared in the same manner as above Cyan Ink C1, except that the 10% aqueous Cross-linkable Polymer 1 solution was replaced with the 10% aqueous Cross-linkable Polymer 3 solution.

### (Preparation of Black Ink K3)

Black Ink K3 was prepared in the same manner as above Black Ink K1, except that the 10% aqueous Cross-linkable Polymer 1 solution was replaced with the 10% aqueous Cross-linkable Polymer 3 solution.

### (Preparation of Ink Set 4)

Ink Set 4, composed of Yellow Ink Y4, Magenta Ink M4, Cyan Ink C4, and Black Ink K4, was prepared based on the following procedure.

### (Preparation of Yellow Ink Y4)

| | |
|---|---|
| Yellow pigment dispersion | 30 parts |
| 10% aqueous Cross-linkable Polymer 4 solution | 20 parts |
| 10% aqueous polyallylamine (FAA-10C, produced by Nitto Boseki Co, Ltd.) solution | 1 part |
| Glycerin | 7 parts |
| Ethylene glycol | 15 parts |
| Diethylene glycol monobutyl ether | 2 parts |
| OLFINE e1010 (produced by Nissin Chemical Industry Co., Ltd.) | 0.2 part |

Ion-exchanged water was added to the above mixture to bring the total to 100 parts, whereby Yellow Ink Y4 was prepared.

### (Preparation of Magenta Ink M4)

Magenta Ink M4 was prepared in the same manner as above Yellow Ink Y4, except that the yellow pigment dispersion was replaced with the magenta pigment dispersion.

### (Preparation of Cyan Ink C4)

Cyan Ink C4 was prepared in the same manner as above Yellow Ink Y4, except that the yellow pigment dispersion was replaced with the cyan pigment dispersion.

### (Preparation of Black Ink K4)

| | |
|---|---|
| Black pigment dispersion | 30 parts |
| 10% aqueous Cross-linkable Polymer 4 Solution | 20 parts |
| 10% aqueous polyallylamine (PAA-10C, produced by Nitto Boseki Co., Ltd.) | 1 part |
| Glycerin | 7 parts |
| Ethylene glycol | 15 parts |
| Diethylene glycol monobutyl ether | 2 parts |
| OLFIN e1010 (produced by Nissin Chemical Industry Co., Ltd.) | 0.2 parts |

Ion-exchanged water was added to the above mixture to bring the total to 100 parts, whereby Black Ink K4 was prepared.

### (Preparation of Ink Set 5)

Ink Set 5, composed of Yellow Ink Y5, Magenta Ink M5, Cyan Ink C5, and Black Ink K5, was prepared based on the following procedure.

### (Preparation of Yellow Ink Y5)

Yellow Ink Y5 was prepared in the same manner as above Yellow Ink Y1, except that the 10% aqueous Cross-linkable Polymer 1 solution was replaced with the 10% aqueous Cross-linkable Polymer 5 solution.

### (Preparation of Magenta Ink M5)

Magenta Ink M5 was prepared in the same manner as above Magenta Ink M1, except that the 10% aqueous Cross-linkable Polymer 1 solution was replaced with the 10% aqueous Cross-linkable Polymer 5 solution.

### (Preparation of Cyan Ink C5)

Cyan Ink C5 was prepared in the same manner as above Cyan Ink C1, except that the 10% aqueous Cross-linkable Polymer 1 solution was replaced with the 10% aqueous Cross-linkable Polymer 5 solution.

### (Preparation of Black Ink K5)

Black Ink K5 was prepared in the same manner as above Black Ink K1, except that the 10% aqueous Cross-linkable Polymer 1 solution was replaced with the 10% aqueous Cross-linkable Polymer 5 solution.

### (Preparation of Ink Set 6)

Ink Set 6, composed of Yellow Ink Y6, Magenta Ink M6, Cyan Ink C6, and Black Ink K6, was prepared based on the following procedure.

### (Preparation of Yellow Ink Y6)

| | |
|---|---|
| Yellow pigment dispersion | 30 parts |
| 10% aqueous Cross-linkable Polymer 1 solution | 5 parts |
| Adipic acid hydrazide | 0.02 part |
| Glycerin | 7 parts |
| Ethylene glycol | 15 parts |
| Diethylene glycol monobutyl ether | 2 parts |
| OLFINE e1010 (produced by Nissin Chemical Industry Co., Ltd.) | 0.2 part |

Ion-exchanged water was added to the above mixture to bring the total to 100 parts, whereby Yellow Ink Y6 was prepared.

### (Preparation of Magenta Ink M6)

Magenta Ink M6 was prepared in the same manner as above Yellow Ink Y6, except that the yellow pigment dispersion was replaced with the magenta pigment dispersion.

### (Preparation of Cyan Ink C6)

Cyan Ink C6 was prepared in the same manner as above Yellow Ink Y6, except that the yellow pigment dispersion was replaced with the cyan pigment dispersion.

### (Preparation of Black Ink K6)

Black Ink K6 was prepared in the same manner as above Yellow Ink Y6, except that the yellow pigment dispersion was replaced with the black pigment dispersion.

### (Preparation of Ink Set 7)

Ink Set 7, composed of Yellow Ink Y7, Magenta Ink M7, Cyan Ink C7, and Black Ink K7, was prepared based on the following procedure.

### (Preparation of Yellow Ink Y7)

| | |
|---|---|
| Yellow pigment dispersion | 30 parts |
| 12% aqueous Cross-linkable Polymer 1 solution (concentrated) | 43 parts |
| Adipic acid hydrazide | 0.2 part |
| Glycerin | 7 parts |
| Ethylene glycol | 15 parts |
| Diethylene glycol monobutyl ether | 2 parts |
| OLFINE e1010 (produced by Nissin Chemical Industry Co., Ltd.) | 0.2 part |

Ion-exchanged water was added to the above mixture to bring the total to 100 parts, whereby Yellow Ink Y7 was prepared.

### (Preparation of Magenta Ink M7)

Magenta Ink M7 was prepared in the same manner as above Yellow Ink Y7, except that the yellow pigment dispersion was replaced with the magenta pigment dispersion.

### (Preparation of Cyan Ink C7)

Cyan Ink C7 was prepared in the same manner as above Yellow Ink Y7, except that the yellow pigment dispersion was replaced with the cyan pigment dispersion.

### (Preparation of Black Ink K7)

Black Ink K7 was prepared in the same manner as above Yellow Ink Y7, except that the yellow pigment dispersion was replaced with the black pigment dispersion.

### (Preparation of Ink Set 8)

Ink Set 8, composed of Yellow Ink Y8, Magenta Ink M8, Cyan Ink C8, and Black Ink K8, was prepared based on the following procedure.

### (Preparation of Ink Set 8)

### (Preparation of Yellow Ink Y8)

| | |
|---|---|
| C. I. Acid Yellow | 3 parts |
| 10% aqueous Cross-linkable Polymer 1 solution | 20 parts |
| Adipic acid hydrazide | 0.1 part |
| Glycerin | 7 parts |
| Ethylene glycol | 15 parts |
| Diethylene glycol monobutyl ether | 2 parts |
| OLFINE e1010 (produced by Nissin Chemical Industry Co., Ltd.) | 0.2 part |

Ion-exchanged water was added to the above mixture to bring the total to 100 parts, whereby Yellow Ink Y8 was prepared.

### (Preparation of Magenta Ink M8)

Magenta Ink M8 was prepared in the same manner as above Yellow Ink Y8, except that C. I. Acid Yellow 23 was replaced with C. I. Direct Red 227.

### (Preparation of Cyan Ink C8)

Cyan Ink C8 was prepared in the same manner as above Yellow Ink Y8, except that C. I. Acid Yellow 23 was replaced with C. I. Direct Blue 199.

### (Preparation of Black Ink K8)

| | |
|---|---|
| C. I. Food Blue 2 | 4 parts |
| 10% aqueous Cross-linkable Polymer 1 Solution | 20 parts |
| Adipic acid hydrazide | 0.1 part |
| Glycerin | 7 parts |
| Ethylene glycol | 15 parts |
| Diethylene glycol monobutyl ether | 2 parts |
| OLFIN e1010 (produced by Nissin Chemical Industry Co., Ltd.) | 0.2 part |

Ion-exchanged water was added to the above mixture to bring the total to 100 parts, whereby Black Ink K1 was prepared.

### (Preparation of Ink Set 9)

Ink Set 9, composed of Yellow Ink Y9, Magenta Ink M9, Cyan Ink C9, and Black Ink K9, was prepared based on the following procedure.

### (Preparation of Yellow Ink Y9)

| | |
|---|---|
| C. I. Pigment Yellow 74 | 10 parts |
| AJISPER PB821 (produced by Ajinomoto Fine Techno Co.) | 3 parts |
| ARONICS M5700 (Toa Gosei Co., Ltd.) | 7 parts |
| Monomer 1: ethylene oxide added 1,6-hexanediol acrylate | 72 parts |
| Monomer 2: 3-methoxybutyl acrylate | 8 parts |
| IRUGACURE 369 (produced by Ciba Specialty Chemicals Co.) | 5 parts |

While stirring, the above components were blended, and the resulting solution was filtered through a filter, whereby Actinic Radiation Curable Type Yellow Ink 9 was prepared.

### (Preparation of Magenta Ink M9)

| | |
|---|---|
| C.I. Pigment Red 122 | 10 parts |
| AJISPER PB821 (produced by Ajinomoto Fine Techno Co.) | 3 parts |
| ARONICS M5700 (Toa Gosei Co., Ltd.) | 7 parts |
| Monomer 1: ethylene oxide added 1,6-hexanediol acrylate | 72 parts |
| Monomer 2: 3-methoxybutyl acrylate | 8 parts |
| IRUGACURE 369 (produced by Ciba Specialty Chemicals Co.) | 5 parts |

While stirring, the above components were blended, and the resulting solution was filtered via a filter, whereby Actinic Radiation Curable Type Magenta Ink M9 was prepared

### (Preparation of Cyan Ink C9)

| | |
|---|---|
| C. I. Pigment Blue 15 : 3 | 10 parts |
| AJISPER PB821 (produced by Ajinomoto Fine Techno Co.) | 3 parts |
| ARONICS M5700 (Toa Gosei Co., Ltd.) | 7 parts |
| Monomer 1: ethylene oxide added 1,6-hexanediol acrylate | 72 parts |
| Monomer 2: 3-methoxybutyl acrylate | 8 parts |
| IRUGACURE 369 (produced by Ciba Specialty Chemicals Co.) | 5 parts |

While stirring, the above components were blended, and the resulting solution was filtered via a filter, whereby Actinic Radiation Curable Type Cyan Ink C9 was prepared.

### (Preparation of Black Ink K9)

| | |
|---|---|
| Carbon Black (MA-7, produced by Mitsubishi Chemical Co., Ltd.) | 10 parts |
| AJISPER PB821 (produced by Ajinomoto Fine Techno Co.) | 3 parts |
| ARONICS M5700 (Toa Gosei Co., Ltd.) | 7 parts |
| Monomer 1: ethylene oxide added 1,6-hexanediol acrylate | 72 parts |
| Monomer 2: 3-methoxybutyl acrylate | 8 parts |
| IRUGACURE 369 (produced by Ciba Specialty Chemicals Co.) | 5 parts |

While stirring, the above components were blended, and the resulting solution was filtered via a filter, whereby Actinic Radiation Curable Type Cyan Ink K9 was prepared.

### (Preparation of Ink Set 10)

Ink Set 9, composed of Yellow Ink Y10, Magenta Ink M10, Cyan Ink C10, and Black Ink K10, was prepared based on the following procedure.

### (Preparation of Yellow Ink Y10)

Yellow Ink Y10 was prepared in the same manner as above Yellow Ink Y1, except that the 10% aqueous Cross-linkable Polymer 1 solution was replaced with the 10% aqueous Cross-linkable Polymer 6 solution.

### (Preparation of Magenta Ink M10)

Magenta Ink M10 was prepared in the same manner as above Magenta Ink M1, except that the 10% aqueous Cross-linkable Polymer 1 solution was replaced with the 10% aqueous Cross-linkable Polymer 6 solution.

### (Preparation of Cyan Ink C10)

Cyan Ink C10 was prepared in the same manner as above Cyan Ink C1, except that the 10% aqueous Cross-linkable Polymer 1 solution was replaced with the 10% aqueous Cross-linkable Polymer 6 solution.

### (Preparation of Black Ink K10)

Black Ink K10 was prepared in the same manner as above Black Ink K1, except that the 10% aqueous Cross-linkable Polymer 1 solution was replaced with the 10% aqueous Cross-linkable Polymer 6 solution.

Each of the compounds, which are listed in Tables 1 and 2, employing abbreviations, are as follows.

### <Cross-linking Groups>

AA group: acetoacetyl group
CB group: carboxyl group
RC group: reactive carbonyl group

### <Cross-linking Agents>

AH: adipic acid hydrazide
PAA: polyallylamine (PAA-10C, produced by Nitto Boseki Co. Ltd.)

### <<Image Formation and Evaluation>>

Ink Sets 1 - 10, prepared as above, were evaluated for each of the following items. "B" or better was evaluated as a level within commercial viability.

### (Evaluation of Beading Resistance)

By employing an on-demand type ink-jet printer at a maximum recording density of 720 x 720 dpi (dpi, as described in the present invention, refers to the number of dots per 2.54 cm), loaded with a piezo type head of a nozzle orifice diameter of 25 µm, a driving frequency of 12 kHz, 128 nozzles, and a nozzle density of 180 dpi, a 5 cm x 5 cm solid magenta image was printed on art paper (being NK ART KINFUJI N, produced by Oji Paper Co., Ltd.). The resulting image was visually evaluated and the beading resistance was evaluated based on the following criteria.

Each ink was continuously ejected and the resulting image was exposed 0.1 second after deposition of ink droplets to radiation emitted from a 120 W/cm metal halide lamp (being MAL 400NL of a source power of 3 kW·hr, produced by Nippon Electric Cell Co., Ltd.) arranged at both ends of the piezo type head.
A: a uniform image was noted
B: when carefully observed, non-uniform noises of less than 5 were noted
C: when carefully observed, non-uniform noises of 5 - 9 were noted
D: non-uniform noises of at least 10 were noted
E: non-uniform noised of at least 20 were noted
Of these, criteria C, D and E were noted as commercially unviable.

### (Evaluation of Bleeding Resistance)

By employing an on-demand type ink-jet printer at a maximum recording density of 720 x 720 dpi, loaded with a piezo type head of a nozzle orifice diameter of 25 µm, a driving frequency of 12 kHz, 128 nozzles, and a nozzle density of 180 dpi, fine black lines were printed on a solid magenta image on art paper (being NK ART KINFIJI N, produced by Oji Paper Co., Ltd.). Subsequently, the resulting fine lines were visually observed and bleeding resistance was evaluated based on the following criteria.

Each ink was continuously ejected and the resulting image was exposed 0.1 second after deposition of ink droplets to radiation emitted from a 120 W/cm metal halide lamp (being MAL 400NL of a source power of 3 kw-hr, produced by Japan Storage Battery Co., Ltd.) arranged at both ends of the piezo type head.
A: the boundary line between the fine line and the solid image was clear
B: slight bleeding was noted on the boundary of some lines but the resulting quality exhibited no problem for commercial viability
C: bleeding was noted in the boundary portions, resulting in slight concern for commercial viability
D: bleeding was clearly noted in the boundary portions and The line width was increased 1.5 times, resulting in problematic quality for commercial viability
E: quality was noted in which the boundary between the fine line and the solid image portion was not clear, resulting in significantly low bleeding resistance
Of these evaluations above, C, D and E were at a level resulting in problems as a commercial product.

### (Evaluation of Sensory Image Smoothness)

By employing an on-demand type ink-jet printer at a maximum recording density of 720 x 720 dpi, loaded with a piezo type head of a nozzle orifice diameter of 25 µm, a driving frequency of 12 kHz, 128 nozzles, and a nozzle density of 180 dpi, highly detailed digital color standard image N3 "Fruit Basket" based on JIS X 9201-1995 was printed on art paper (being NK ART KINFIJI N, produced by Oji Paper Co., Ltd.). Subsequently, the resulting image was visually observed and sensory image smoothness was evaluated based on the following criteria.

Each ink was continuously ejected and the resulting image was exposed 0.1 second after deposition of ink droplets to radiation emitted from a 120 W/cm metal halide lamp (being MAL 400NL of a source power of 3 kW·hr, produced by Japan Storage Battery Co., Ltd.) arranged at both ends of the piezo type head.
A: difference in the feel of smoothness between the recorded image surface and the non-printed portion was hardly noticeable, resulting in a natural appearance
B: the feel of the recorded image surface was slightly different from that of the non-recorded portion, but the resulting quality was commercially viable
C: the recorded image surface resulted to a certain extent in the feel of roughness, resulting in a slight concern for commercial viability
D: the recorded image surface was felt to be rough, clearly exhibiting no smoothness
E: roughness was not only observed visually but also felt via contact test

### (Evaluation of Fixability)

Each of the Ink Sets was placed in an on-demand type ink-jet printer at a maximum recording density of 720 x 720 dpi, loaded with a piezo type head of a nozzle orifice diameter of 25 µm, a driving frequency of 12 kHz, 128 nozzles, and a nozzle density of 180 dpi, and a 10 cm x 10 cm cyan solid image was printed on art paper (being NK ART KINFIJI N, produced by Oji Paper Co., Ltd.).

Each ink was continuously ejected and the resulting image was exposed 0.1 second after deposition of ink droplets to radiation emitted from a 120 W/cm metal halide lamp (being MAL 400NL of a source power of 3 kW·hr, produced by Japan Storage Battery Co., Ltd.) arranged at both ends of the piezo type head.

Each of the image samples, prepared as above, was rubbed 20 times employing an eraser (being HI-POLYMER ERASER, produced by PENTEL Co., Ltd.). Thereafter, the presence of stain formation of the printed portion was visually checked and the abrasion resistance was evaluated based on the following criteria.
A: no change of the printed image was noted
B: when observed in detail, the printed image was slightly stained
C: staining of the printed image was clearly noted, resulting in slight concern for commercial viability
D: the printed image was clearly stained, exhibiting quality beyond commercial viability
E: the printed image was markedly stained, exhibiting no commercial viability.

### (Evaluation of Waterfastness)

Images to be evaluated were prepared in the same manner as for the above fixability evaluation. Subsequently, the surface of the resulting evaluation image was rubbed back and forth 30 times based on the JSPS type friction test. Any decrease in image density after the test was visually observed and the waterfastness was evaluated based on the following criteria.
A: no color decrease was noted
B: slight color decrease was noted, resulting in no concern as a commercial viable image
C: obvious color decrease was noted, resulting in some concern for commercial viability
D: significant color decease was noted, resulting in quality beyond the range of commercial viability
E: color decrease was significant, resulting in no commercial viability due to a markedly stained image
Table 2 shows the results.

**Table 1**

| Type | Modification Ratio of Photo cross-linkable Side Chain (mol%) | Thermally Active Side Chain | Remarks |
|---|---|---|---|
| Cross-linkable Polymer 1 | 3.0 | AA group | Present Invention |
| Cross-linkable Polymer 2 | 0.4 | AA group | Present Invention |
| Cross-linkable Polymer 3 | 4.5 | AA group | Present Invention |
| Cross-linkable Polymer 4 | 3.0 | CB group | Present Invention |
| Cross-linkable Polymer 5 | 3.0 | RC group | Present Invention |
| Cross-linkable Polymer 6 | 3.0 | - | Comparative Example |

**Table 2**

| Ink Set No. | Colorant Type | Cross-linkable Polymer or Monomer | | *1 | Individual Evaluation Result | | | | | Remarks |
|---|---|---|---|---|---|---|---|---|---|---|
| | | Type | Added Amount (%) | | Color Bleeding Resistance | Beading Resistance | Image Smoothness | Water-fastness | Fixalility | |
| 1 | pigment | Cross-linkablePolymer 1 | 2.0 | AH | A | A | A | A | A | Inv. |
| 2 | pigment | Cross-linkablePolymer 2 | 2.0 | AH | B | B | A | A | A | Inv. |
| 3 | pigment | Cross-linkablePolymer 3 | 2.0 | AH | A | A | A | A | A | Inv. |
| 4 | pigment | Cross-linkablePolymer 4 | 2.0 | PAA | A | A | A | A | A | Inv. |
| 5 | pigment | Cross-linkablePolymer 5 | 2.0 | AH | A | A | A | A | A | Inv. |
| 6 | pigment | Cross-linkablePolymer 1 | 0.5 | AH | A | A | A | B | B | Inv. |
| 7 | pigment | Cross-linkablePolymer 1 | 5.2 | AH | A | A | B | A | A | Inv, |
| 8 | dye | Cross-linkablePolymer 1 | 2.0 | AH | A | A | A | A | A | Inv. |
| 9 | pigment | Monomer 1, Monomer 2 | 80 | - | A | A | E | B | B | Comp. |
| 10 | pigment | Cross-linkable Polymer 6 | 2.0 | - | A | A | A | C | C | Comp. |

| | | | | | | | | | | |
|---|---|---|---|---|---|---|---|---|---|---|
| *1: Cross-linking Agent Inv.: Present Invention, Comp.: Comparative Example | | | | | | | | | | |

As can clearly be seen from the results described in Table 2, images, formed employing the ink sets composed of the inks specified in the present invention, were not subjected to deterioration of color bleeding resistance and beading resistance, compared to the comparative examples, but exhibited excellent imager smoothness, waterfastness, and fixability.

## Claims

1. An ink-jet ink comprising:
(a) a colorant;
(b) water;
(c) a polymer produced by saponification of a polyvinyl acetate; and
(d) a cross-linking agent,
wherein the polymer comprises a backbone and a group of first side chains and a group of second side chains, provided that the first chains are cross-linkable between the first chains by irradiation with actinic rays, and the second chains are capable of thermally reacting with the cross-linking agent.

2. The ink-jet ink of claim 1, wherein the second side chain comprises an acetoacetyl group or a carboxyl group.

3. The ink-jet ink of claim 2, further comprising the cross-linking agent capable of reacting with an acetoacetyl group or a carboxyl group.

4. The ink-jet ink of claim 1, wherein the cross-linking agent is selected from the group consisting of hydrazine compounds, amine compounds, epoxy compounds, aziridine compounds, oxazoline compounds and metal salts having a metal of two valences or more.

5. The ink-jet ink of any one of claims 1 to 4, wherein a content of the polymer is 0.8 to 5.0 weight% based on the total weight of the ink-jet ink.

6. The ink-jet ink of any one of claims 1 to 5, wherein a polymerization degree of the polymer is 200 to 4,000 and a saponification ratio of the polymer is 77 to 99%.

7. The ink-jet ink of any one of claims 1 to 6, wherein a modification ratio of the first side chains to the backbone of the polymer is 0.8 to 4 mol%.

8. the ink-jet ink of any one of claims 1 to 7, further comprising a water-soluble photopolymerization initiator.

9. An ink set comprising at least two kinds of ink-jet inks, wherein at least one of the ink-jet inks is the ink-jet ink of any one of claims 1 to 8.

10. A method of forming an image comprising the steps of:
(a) ejecting droplets of the ink-jet ink of any one of claims 1 to 8 on a recording medium;
(b) irradiating the droplets of the ink-jet ink on the recording medium with actinic rays; and
(c) drying the irradiated droplets of the ink-jet ink.

## Patentansprüche

1. Tintenstrahltinte, umfassend:
(a) ein Farbmittel,
(b) Wasser,
(c) ein Polymer, das durch Verseifung eines Polyvinylacetats hergestellt wurde, und
(d) ein Vernetzungsmittel,
wobei das Polymer ein Grundgerüst und eine Gruppe von ersten Seitenketten und eine Gruppe von zweiten Seitenketten umfasst, mit der Maßgabe, dass die ersten Ketten durch Bestrahlen mit photochemisch wirksamer Strahlung zwischen den ersten Ketten vernetzbar sind und die zweiten Ketten zur thermischen Reaktion mit dem Vernetzungsmittel fähig sind.

2. Tintenstrahltinte nach Anspruch 1, wobei die zweite Seitenkette eine Acetoacetylgruppe oder eine Carboxylgruppe umfasst.

3. Tintenstrahltinte nach Anspruch 2, die ferner ein Vernetzungsmittel, das zur Reaktion mit einer Acetoacetylgruppe oder einer Carboxylgruppe fähig ist, umfasst.

4. Tintenstrahltinte nach Anspruch 1, wobei das Vernetzungsmittel aus der Gruppe von Hydrazinverbindungen, Aminverbindungen, Epoxyverbindungen, Aziridinverbindungen, Oxazolinverbindungen und Metallsalzen mit einem Metall mit zwei oder mehr Valenzen ausgewählt ist.

5. Tintenstrahltinte nach einem der Ansprüche 1 bis 4, wobei der Gehalt an dem Polymer 0,8 bis 5,0 Gew.-%, bezogen auf das Gesamtgewicht der Tintenstrahltinte, beträgt.

6. Tintenstrahltinte nach einem der Ansprüche 1 bis 5, wobei der Polymerisationsgrad des Polymers 200 bis 4000 beträgt und die Verseifungsrate des Polymers 77 bis 99 % beträgt.

7. Tintenstrahltinte nach einem der Ansprüche 1 bis 6, wobei die Modifizierungsrate der ersten Seitenketten an dem Grundgerüst des Polymers 0,8 bis 4 Mol-% beträgt.

8. Tintenstrahltinte nach einem der Ansprüche 1 bis 7, die ferner einen wasserlöslichen Photopolymerisationsinitiator umfasst.

9. Tintensatz, der mindestens zwei Arten von Tintenstrahltinten umfasst, wobei mindestens eine der Tintenstrahltinten die Tintenstrahltinte nach einem der Ansprüche 1 bis 8 ist.

10. Verfahren zur Erzeugung eines Bildes, umfassend die Stufen:
(a) Ausstoßen von Tröpfchen der Tintenstrahltinte nach einem der Ansprüche 1 bis 8 auf ein Aufzeichnungsmedium;
(b) Bestrahlen der Tröpfchen der Tintenstrahltinte auf dem Aufzeichnungsmedium mit photochemisch wirksamer Strahlung; und
(c) Trocknen der bestrahlten Tröpfchen der Tintenstrahltinte.

## Revendications

1. Encre pour jet d'encre, comprenant :
(a) un colorant ;
(b) de l'eau ;
(c) un polymère préparé par saponification d'un poly(acétate de vinyle) ; et
(d) un agent de réticulation,
dans laquelle le polymère comprend une chaîne principale et un groupe de premières chaînes latérales et un groupe de secondes chaînes latérales, étant entendu que les premières chaînes sont réticulables entre les premières chaînes par irradiation avec des rayons actiniques, et que les secondes chaînes sont capables de réagir thermiquement avec l'agent de réticulation.

2. Encre pour jet d'encre selon la revendication 1, dans laquelle la seconde chaîne latérale comprend un groupe acétoacétyle ou un groupe carboxyle.

3. Encre pour jet d'encre selon la revendication 2, comprenant en outre l'agent de réticulation capable de réagir avec un groupe acétoacétyle ou un groupe carboxyle.

4. Encre pour jet d'encre selon la revendication 1, dans laquelle l'agent de réticulation est choisi dans le groupe constitué par les composés d'hydrazine, les composés d'amine, les composés époxy, les composés d'aziridine, les composés d'oxazoline et les sels métalliques ayant un métal de valence deux ou plus.

5. Encre pour jet d'encre selon l'une quelconque des revendications 1 à 4, dans laquelle la teneur du polymère est de 0,8 à 5,0 % en poids par rapport au poids total de l'encre pour jet d'encre.

6. Encre pour jet d'encre selon l'une quelconque des revendications 1 à 5, dans laquelle le degré de polymérisation du polymère est de 200 à 4 000 et le taux de saponification du polymère est de 77 à 99 %.

7. Encre pour jet d'encre selon l'une quelconque des revendications 1 à 6, dans laquelle le taux de modification des premières chaînes latérales par rapport au squelette du polymère est de 0,8 à 4 % en moles.

8. Encre pour jet d'encre selon l'une quelconque des revendications 1 à 7, comprenant en outre un amorceur de photopolymérisation hydrosoluble.

9. Assortiment d'encres comprenant au moins deux sortes d'encres pour jet d'encre, dans lequel au moins l'une des encres pour jet d'encre est l'encre pour jet d'encre selon l'une quelconque des revendications 1 à 8.

10. Procédé de formation d'une image, comprenant les étapes consistant :
(a) à éjecter des gouttelettes de l'encre pour et d'encre selon l'une quelconque des revendications 1 à 8 sur un milieu d'enregistrement ;
(b) à irradier les gouttelettes de l'encre pour jet d'encre sur le milieu d'enregistrement avec des rayons actiniques ; et
(c) à sécher les gouttelettes irradiées de l'encre pour et d'encre.
